# EUROPEAN PATENT SPECIFICATION

(11) **EP 2 963 957 B1**
(45) Date of publication and mention of the grant of the patent: **25.03.2020**
(21) Application number: 13876165.5
(22) Date of filing: 18.09.2013
(51) Int. Cl.: H04W 4/16, H04W 8/28

(54) **METHOD AND DEVICE FOR CALLING BY BINDING CLIENT TO TERMINAL**
VERFAHREN UND VORRICHTUNG ZUM ANRUFEN DURCH VERBINDUNG EINES CLIENTS AN EIN ENDGERÄT
PROCÉDÉ ET DISPOSITIF POUR EXÉCUTER UN APPEL EN LIANT UN CLIENT À UN TERMINAL

(30) Priority: 01.03.2013 CN 201310066733
(43) Date of publication of application: 06.01.2016
(73) Proprietor: ZTE Corporation, 518057 Shenzhen City, Guangdong Province (CN)
(72) Inventor: WANG, Mingde, Shenzhen City Guangdong Province 518057 (CN)
(74) Representative: Baudler, Ron
(86) International application number: PCT/CN2013/083732
(87) International publication number: WO 2014/131278

(56) References cited:
- EP-A1- 2 237 542
- EP-A1- 2 986 040
- CN-A- 101 442 738
- CN-A- 101 527 893
- CN-A- 101 888 454
- US-A1- 2007 058 613
- US-A1- 2010 195 811
- US-A1- 2010 195 811

## Description

### Technical Field

The present invention relates to the field of mobile communications, and more particularly, to a method and a software client for calling by binding a client to a terminal.

### Background of the Related Art

In the related art, Voice over IP (VOIP) service has been applied very widely, initiating or receiving calls by installing a software client in a Personal Computer (PC) or a mobile terminal, and using free call services or call services with relatively low rates can save communication costs of individual users and enterprises.

In the use of the VOIP phone, there are always the problem of poor call quality due to network signal instability or insufficient data network bandwidth, wherein the most typical case is that the sound is not continuous, the talk delay is big, and one party cannot hear the talk of other party, thus affecting the communication; in addition, when the user uses the VOIP function provided by the software client in a PC, there are restrictions that the PC must be provided with a headset, and the user has to sit next to the PC, and so on. If a call comes in when the user is not in the vicinity of the logged-in software client, the incoming call will be missed.

The document CN101527893A discloses a voice communication calling method for a calling party at a software client.

The document US20100195811A1 discloses a telephone number binding in a voice-over-Internet system. It discloses a scheme of providing a telephone number associated with the existing telephone line to a voice-over-Internet platform, and linking the existing telephone number to a unique identifier associated with the customer voice-over-Internet device.
Document EP2237542 discloses a call control method wherein a terminal is bound to a software client and wherein a softswitch is used to perform a call to the calling and the called terminals.

### Summary of the Invention

The embodiment of the present document provides a method according to claim 1 and a software client according to claim 8 for calling by binding a software client to a terminal. Further improvements and embodiments are provided in the dependent claims.

Also provided is a method for calling by binding a client to a terminal, which comprises:
obtaining a soft terminal number assigned by a service after a user logs in the client;
obtaining a phone number, input by the user, of the terminal bound with the client, performing validity checking on the phone number, and associating the phone number with the soft terminal number in the case that the validity checking is passed; and
when the user performs a call service through the client, connecting the call service to the phone number.

Alternatively, the abovementioned method further comprises:
canceling binding with the phone number according to operations of the user; and
when the user performs a call service through the client, connecting the call service to the soft terminal number.

Alternatively, the abovementioned method further comprises:
maintaining a list of phone numbers bound in history; and
when the user inputs a phone number bound with the client, displaying the list of phone numbers to the user.

Alternatively, said performing the validity checking on the phone number comprises:
obtaining a preset list of numbers prohibited from being bound, comparing the phone number with numbers in the list of numbers prohibited from being bound, and if the phone number is not in the list of numbers prohibited from being bound, the validity checking is passed, and if the phone number is in the list of numbers prohibited from being bound, the validity checking is not passed; and
in the case that the validity checking is passed, if it is determined that it is necessary to add an area code or add 0 to the phone number, regulating the phone number.

Alternatively, said associating the phone number with the soft terminal number comprises:
storing the phone number in user information corresponding to the soft terminal number, and setting a number binding identification as bound.

Alternatively, said connecting the call service to the phone number when the user performs the call service through the client comprises:
when the user initiates a call to a terminal with called number through the client, checking the number binding identification, and in the case that the number binding identification is identified as bound, obtaining the bound phone number from the user information, and initiating a call to the phone number through a core network, and after the bound terminal rings and the user answers the call, initiating a call to the terminal with the called number through the core network; and
when other users initiate a call to the soft terminal number, regardless of whether the user logs in the client or not, after receiving a call service trigger from the core network, checking the number binding identification, and in the case that the number binding identification is identified as bound, obtaining the bound phone number from the user information, and initiating a call to the phone number to the core network.

Alternatively, said canceling binding with the phone number according to operations of the user comprises:
setting the phone number to empty, and setting the number binding identification as not bound.

Alternatively, said connecting the call service to the soft terminal number when the user performs the call service through the client comprises:
when the user initiates a call to the terminal with the called number through the client, checking the number binding identification, and in the case that the number binding identification is identified as not bound, taking the soft terminal number as the calling number, and initiating a call to the terminal with the called number through the core network; and
when other users initiate a call to the soft terminal number, receiving a call service trigger from the core network, checking the number binding identification, and in the case that the number binding identification is identified as not bound, initiating a call to the soft terminal number through the core network.

Alternatively, the terminal bound with the client is a fixed terminal or a mobile terminal, the phone number bound with the client is a fixed phone number or a mobile phone number; and the client is provided in a PC or a mobile terminal.

Also provided is a device for calling by binding a client to a terminal, which comprises:
an obtaining module, which is configured to: obtain a soft terminal number assigned by a service after a user logs in the client;
a binding module, which is configured to: obtain a phone number, input by the user, of the terminal bound with the client, perform validity checking on the phone number, and associate the phone number with the soft terminal number in the case that the validity checking is passed; and
a connecting module, which is configured to: when the user performs a call service through the client, connect the call service to the phone number.

Alternatively,
the abovementioned binding module is further configured to: cancel binding with the phone number according to operations of the user; and
the connecting module is further configured to: when the user performs a call service through the client, connect the call service to the soft terminal number.

Alternatively, the abovementioned binding module is further configured to:
maintain a list of phone numbers bound in history; and
when the user inputs a phone number bound with the client, display the list of phone numbers to the user.

Alternatively, the abovementioned binding module is configured to perform the validity checking on the phone number in the following manner:
obtaining a preset list of numbers prohibited from being bound, comparing the phone number with numbers in the list of numbers prohibited from being bound, and the validity checking is passed if the phone number is not in the list of numbers prohibited from being bound, and the validity checking is not passed if the phone number is in the list of numbers prohibited from being bound; and
in the case that the validity checking is passed, if it is determined that it is necessary to add an area code or add 0 to the phone number, then regulating the phone number.

Alternatively, the abovementioned binding module is configured to associate the phone number with the soft terminal number in the following manner:
storing the phone number in user information corresponding to the soft terminal number, and setting a number binding identification as bound;
the connecting module is configured to connect the call service to the phone number when the user performs the call service through the client in the following manner:
   when a user initiates a call to the terminal with the called number through the client, checking the number binding identification, and obtaining the bound phone number from the user information in the case that the number binding identification is identified as bound, and initiating a call to the phone number through the core network, and after the bound terminal rings and the user answers the call, initiating a call to the terminal with the called number through the core network; and
   when other users initiate a call to the soft terminal number, regardless of whether the user logs in the client or not, checking the number binding identification after receiving a call service trigger from the core network, and in the case that the number binding identification is identified as bound, obtaining the bound phone number from the user information, and initiating a call to the phone number to the core network.

Alternatively, the abovementioned binding module is configured to cancel binding with the phone number according to operations of the user in the following manner:
setting the phone number to empty, and setting the number binding identification as not bound;
the connecting module is configured to connect the call service to the soft terminal number when the user performs the call service through the client in the following manner:
   when the user initiates a call to the terminal with the called number through the client, checking the number binding identification, and taking the soft terminal number as the calling number in the case that the number binding identification is identified as not bound, and initiating a call to the terminal with the called number through the core network; and
   when other users initiate a call to the soft terminal number, receiving a call service trigger from the core network, and checking the number binding identification, and in the case that the number binding identification is identified as not bound, initiating a call to the soft terminal number through the core network.

Alternatively, the terminal bound with the client is a fixed terminal or a mobile terminal, and the phone number bound with the client is a fixed phone number or a mobile phone number; the client is provided in a PC or a mobile terminal.

The embodiment of the present document solves the problem in the related art that the call quality is low and incoming calls might be missed by binding the software client to the operator's fixed phone number or mobile phone number, and uses the VOIP service to obtain reliable call quality in the circuit switched (CS) domain, thus having greater flexibility and not missing incoming calls.

### Brief Description of Drawings

FIG. 1 is a flow chart of a method for calling by binding a client to a terminal in accordance with an embodiment of the present document;
FIG. 2 is a schematic diagram of the structure of a device for calling by binding a client to a terminal in accordance with an embodiment of the present document;
FIG. 3 is a flow chart of a number binding operation in accordance with an embodiment of the present document;
FIG. 4 is a schematic diagram of a number validity analyzing process in accordance with an embodiment of the present document;
FIG. 5 is a schematic diagram of a canceling binding process in accordance with an embodiment of the present document;
FIG. 6 is a schematic diagram of the process of a user initiating a call through a software client in accordance with an embodiment of the present document; and
FIG. 7 is a schematic diagram of the process of a user receiving a call through a software client in accordance with an embodiment of the present document.

### Preferred Embodiments of the Invention

Hereinafter in conjunction with the accompanying drawings, the exemplary embodiments of the present document will be described in detail. Although the accompanying drawings show exemplary embodiments of the present document, it should be understood that, the present document may be implemented in various forms and should not be limited by the embodiments set forth herein. Instead, these embodiments are provided for a more thorough understanding of the present document, and are able to completely convey the scope of the present document to those skilled in the art.

In order to solve the problem in the related art that the call quality is low and incoming calls might be missed, the embodiment of the present document provides a method and device for calling by binding a client to a terminal. First, the client applies to use the service, obtains an account and a password needed in order to use the service; after the client obtains a software client and performs login successfully, the service will assign one soft terminal number for the VOIP call connection; the user does not use the soft terminal number, but binds to the fixed phone number or mobile phone number of an operator; the bound number is submitted to the call service in order to analyze the validity of the bound number, and the number is associate with the soft terminal number after being determined as valid; when it needs to make a call or there is an incoming call, the call service will be connected to the bound number; if the user does not use the bound numbers, a canceling binding operation will be performed, and the call service is notified, and subsequent outgoing and incoming calls are connected with the soft terminal number.

Hereinafter in conjunction with the accompanying drawings, the embodiments of the present document will be described in detail. It should be understood that, in the case of no conflict, embodiments and features in the embodiments of the present application may be arbitrarily combined with each other.

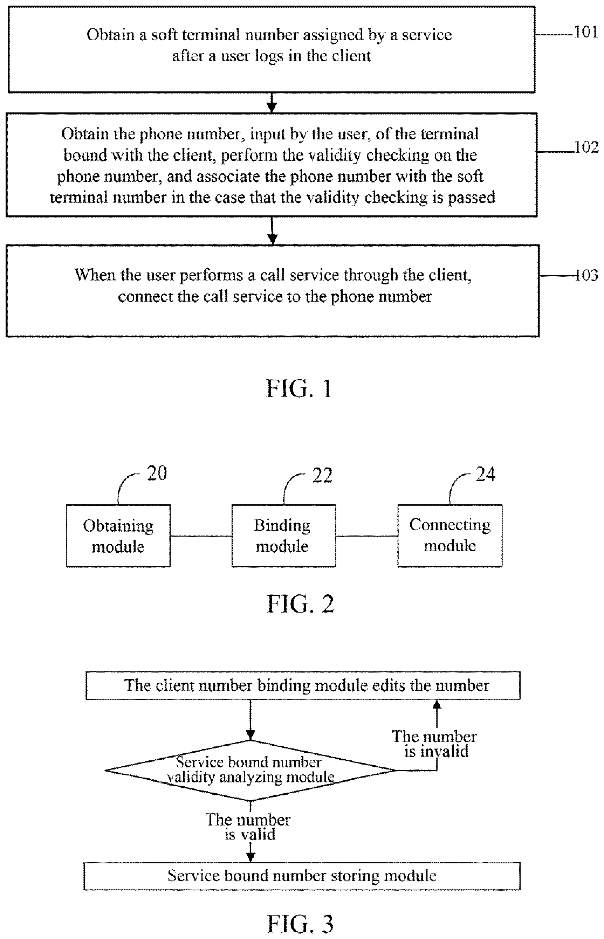

According to the embodiment of the present document, a method for calling by binding a client to a terminal is provided, and FIG. 1 is a flow chart of the method for calling by binding a client to a terminal in accordance with an embodiment of the present document, as shown in FIG. 1, the method for calling by binding a client to a terminal in accordance with the embodiment of the present document comprises the following steps:
in step 101, it is to obtain a soft terminal number assigned by a service after a user logs in the client;
in step 102, it is to obtain the phone number, input by the user, of the terminal bound with the client, perform validity checking on the phone number, and associate the phone number with the soft terminal number in the case that the validity checking is passed.

Alternatively, the embodiment of the present document may maintain a list of phone numbers bound in history; and when the user inputs a phone number bound with the client, the list of phone numbers is displayed to the user.

In the step 102, said performing the validity checking on a phone number comprises: obtaining a preset list of numbers prohibited from being bound, comparing the phone number with numbers in the list of numbers prohibited from being bound, and the validity checking is passed if the phone number is not in the list of numbers prohibited from being bound, and the validity checking is not passed if the phone number is in the list of phone numbers prohibited from being bound; in the case that the validity checking is passed, if it is determined that it is necessary to add an area code or add 0 to the phone number, regulating the phone number.

In step 102, said associating the phone number with the soft terminal number comprises: storing the phone number in the user information corresponding to the soft terminal number, and setting the number binding identification as bound.

In step 103, when the user performs a call service through the client, the call service is connected to the phone number.

The step 103 comprises the following processing:
when the user initiates a call to the terminal with the called number through the client, checking the number binding identification, and obtaining the bound phone number from the user information in the case that the number binding identification is identified as bound, and initiating a call to the phone number through the core network, and after the bound terminal rings and the user answers the call, initiating a call to the terminal with the called number through the core network; and
when other users initiate a call to the soft terminal number, regardless of whether the user logs in the client or not, after receiving a call service trigger from the core network, checking the number binding identification, and obtaining the bound phone number from the user information in the case that the number binding identification is identified as bound, and initiating to a call to the phone number to the core network.

Alternatively, the embodiment of the present document further comprises the following processing:
canceling binding with the phone number according to operations of the user; and
when the user performs a call service through the client, connecting the call service to the soft terminal number.

In the embodiment of the present document, said canceling binding with the phone number according to operations of the user comprises: setting the phone number to empty, and setting the number binding identification as not bound.

After the unbinding, when the user initiates a call to the terminal with the called number through the client, the number binding identification is checked, taking the soft terminal number as the calling number in the case that the number binding identification is identified as not bound, and initiating a call to the terminal with the called number through the core network; when other users initiate a call to the soft terminal number, a call service trigger from the core network is received, checking the number binding identification, in the case that the number binding identification is identified as not bound, initiating a call to the soft terminal number through the core network.

It should be mentioned that, the terminal bound with the client is a fixed terminal or a mobile terminal, the phone number bound with the client is a fixed phone number or a mobile phone number; and the client is provided in a PC or a mobile terminal.

The embodiment of the present document provides a device for calling by binding a client to a terminal, and FIG. 2 is a schematic diagram of the structure of the device for calling by binding a client to a terminal in accordance with the embodiment of the present document, as shown in FIG. 2, the device for calling by binding a client to a terminal in accordance with the embodiment of the present document comprises: an obtaining module 20, a binding module 22 and a connecting module 24, and in the following, respective modules according to the embodiment of the present document will be described in detail.

The obtaining module 20 is used to: obtain a soft terminal number assigned by a service after a user logs in the client;
the binding module 22 is used to: obtain the phone number, input by the user, of the terminal bound with the client, perform the validity checking on the phone number, and associate the phone number with the soft terminal number in the case that the validity checking is passed; and
the binding module 22 is further used to: cancel binding with the phone number according to operations of the user; and maintain a list of phone numbers bound in history; and when the user inputs a phone number bound with the client, display the list of phone numbers to the user.

The binding module 22 is used to perform the validity checking on the phone number in the following manner:
obtaining a preset list of numbers prohibited from being bound, comparing the phone number with the numbers in the list of numbers prohibited from being bound, and the validity checking is passed if the phone number is not in the list of numbers prohibited from being bound, and the validity checking is not passed if the phone number is in the list of numbers prohibited from being bound; in the case that the validity checking is passed, if it is determined that it is necessary to add an area code or add 0 to the phone number, regulating the phone number.

The binding module 22 is used to associate the phone number with the soft terminal number in the following manner: storing the phone number in the user information corresponding to the soft terminal number, and set the number binding identification as bound; and
the binding module 22 is used to cancel binding with the phone number according to operations of the user in the following manner: setting the phone number to empty, and setting the number binding identification as not bound.

The connecting module 24 is used to: when the user performs a call service through the client, connect the call service to the phone number.

The connecting module 24 is further configured to: when the user performs a call service through the client, connect the call service to the soft terminal number.

The connecting module 24 is used to connect the call service to the phone number when the user performs a call service through the client in the following manner:
when the user initiates a call to the terminal with the called number through the client, checking the number binding identification, and obtaining the bound phone number from the user information in the case that the number binding identification is identified as bound, and initiating a call to the phone number through the core network, after the bound terminal rings and the user answers the call, initiating the call to the terminal with the called number through the core network; and
when other users initiate a call to the soft terminal number, regardless of whether the user logs in the client or not, checking the number binding identification after receiving a call service trigger from the core network, and obtaining the bound phone number from the user information in the case that the number binding identification is identified as bound, and initiating a call to the phone number to the core network.

The connecting module 24 is used to connect the call service to the soft terminal number when the user performs the call service through the client in the following manner:
when the user initiates a call to the terminal with the called number through the client, checking the number binding identification, and taking the soft terminal number as the calling number in the case that the number binding identification is identified as not bound, and initiating a call to the terminal with the called number through the core network; and
when other users initiate a call to the soft terminal number, receiving a call service trigger from the core network, checking the number binding identification, and initiating a call to the soft terminal number through the core network in the case that the number binding identification is identified as not bound.

It should be noted that, the terminal bound with the client is a fixed terminal or a mobile terminal, the phone number bound with the client is a fixed phone number or a mobile phone number; and the client is provided in a PC or a mobile terminal.

In the following, the technical solution of the method embodiment of the present document will be described in detail with combination of the device embodiment of the present document, and it should be noted that, the names of the following various modules are different from the names of the modules in the device embodiment of the present document, and the functions of following various modules may be a combination of the functions of multiple abovementioned modules, or a part of the functions of one abovementioned module.

The embodiment of the present document provides a method and device for calling by binding the software client to the operator's fixed phone or mobile phone number, and the software client is installed in a PC or mobile terminal, and the software client can only use the function provided by the software client through performing login with a user name and a password after the call service server performs the authentication successfully.

In the embodiment of the present document, what is used to initiate or receive a call through the software client is the VOIP technology, such as Skype, the software client can provide the voice codec algorithm and the voice quality associated control algorithm, such as echo suppression, packet loss compensation, and so on. In the embodiment of the present document, the software client also provides the instant messaging, friend list, friend online state, business contacts, personal contacts and other functions in addition to the call function. The client software is an integrated communications portal that can greatly improve the communication efficiency.

The present example comprises the following modules:
a software client number binding module (corresponding to the abovementioned binding module 22), used to set the bound number or cancel the bound number. For the convenience of users, the software client number binding module may also maintain a list of bound numbers, and there is no need to re-enter when binding the number, and it simply needs to select one historical number, which is convenient for the user to operate. After the user sets the bound number, the number is submitted to the service side.

A software client call processing module (corresponding to the abovementioned connecting module 24), which is used to initiate a call or receive a call, and display the call-related information.

A service bound number validity analyzing module (corresponding to the abovementioned binding module 22), used to analyze the integrity and validity of a number. Under normal circumstances, some numbers, such as fire, first aid and corporate special service numbers, are not allowed to be bound, and chaos would be caused if these numbers are bound. In addition, it also needs to analyze whether a number belongs to a fixed operator or a mobile operator, and the fixed operator number needs to include an area code, and if the mobile operator is in other cities, it needs to add 0 in front of the number.

A service bound number storing module (corresponding to the abovementioned binding module 22), used to maintain the binding identification and store the numbers. If one number is set, the set number is stored in the user information, and the number binding identification is set as bound; if the setting is canceled, the bound number stored in the user information is cleared, and the number binding identification is modified as not bound.

A service call processing module (corresponding to the connecting module 24), which is used to, when the user initiates a call, after the software client call processing module initiates a call request to the service call processing module, check the number binding identification, if it is identified as bound, obtain the bound number from the user information, and if it is identified as not bound, use the soft terminal number assigned by the service. The service call processing module interacts with the core network, and initiates a call to the terminal with the called number. If the user is the called, the service call processing module receives a call request from the core network, the service call processing module also checks the number binding identification, and if it is identified as bound, it obtains the bound number from the user information. If it is identified as not bound, the soft terminal number assigned by the service is used, and the service call processing module interacts with the core network and initiates a call to the terminal with the called number. Wherein, the core network is the operator's network equipment that is responsible for call routing and billing control based on the Next Generation Network/Internet Protocol Multimedia Subsystem (NGN/IMS). The bound terminal is a fixed phone or a mobile phone, and a call is answered after the phone rings and is then picked up.

According to the technical solution of the embodiment of the present document, it mainly relates to two operations, one is the number binding/canceling binding operation, and the other is the calling operation.

### First operation, number binding/canceling binding operation

After the user performs login successfully, the client software displays the bound number information set by the user. The user can bind a number or not. When no number is bound, the client uses the soft terminal number assigned by the service, and the user does not need to care what the number is. When the service assigns the soft terminal number, the number can be fixed as a part of the user information, or the number may be random, and the call service maintains a number pool, after each user performs login successfully, a number from the number pool is assigned, and after the user logs off, the number is recycled and can be assigned to other users for using.

FIG. 3 is a flow chart of the number binding operation in accordance with an embodiment of the present document, and as shown in FIG. 3, the software client binding to a number is implemented by the client number binding module, and the user uses the client for the first time, and uses the input box to manually input the number. The numbers bound by the user are maintained in the history list, and usually the history list saves several recent numbers. When the client has already bound the number, at the next time of performing the number binding operation, the input box can be used for input, or the bound number history list is clicked and a number is selected from the list, and there is no need to re-input, which is convenient for the user to operate. After the number with which the client needs to be bound is determined, the client number binding module submits the bound number to the service bound number validity analyzing module. The service bound number validity analyzing module analyzes the validity of the number, and the client number binding module needs to re-edit the number if the number is not valid, and the service bound number validity analyzing module sends the number to the service bound number storing module if the number is valid.

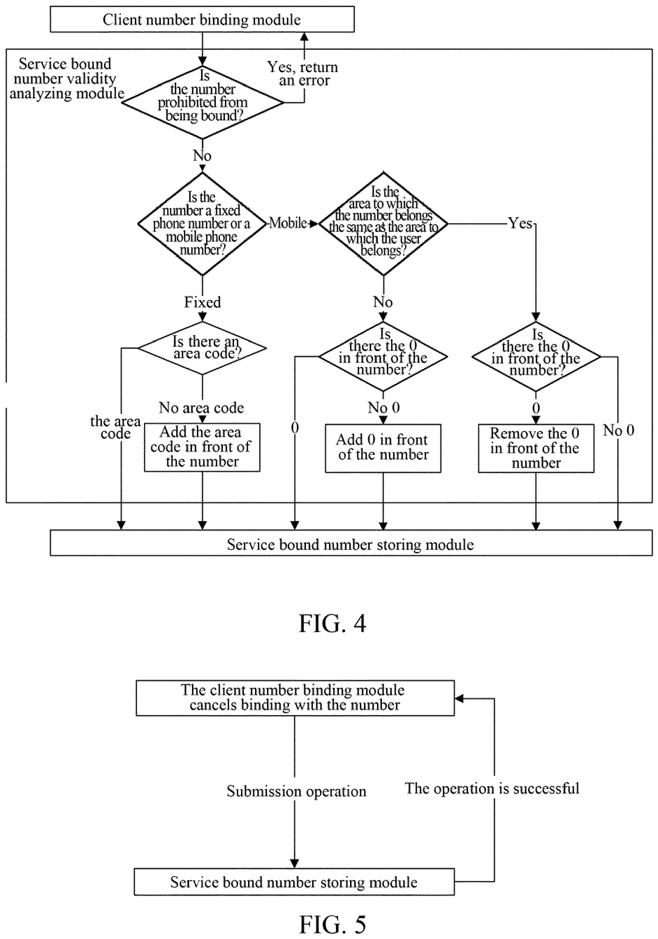

FIG. 4 is a schematic diagram of the number validity analyzing process in accordance with an embodiment of the present document, and as shown in FIG. 4, the service bound number validity analyzing module maintains a list of numbers prohibited from being bound, and if the number bound by the user is in the list of numbers prohibited from being bound, the service bound number validity analyzing module returns the binding error information to the client number binding module, and the user needs to re-input a new number.

If the number is not in the list of numbers prohibited from being bound, the service bound number validity analyzing module needs to regulate the number, and a fixed number needs to include an area code, and if a mobile number is roaming, it needs to add 0 in front of the number.

The number that passes the service binding number validity analysis is sent to the service bound number storing module. The stored information comprises the number binding identification and the bound number. The number binding identification explains whether the user has a bound number or not. If the number is bound successfully, the number binding identification is set as bound, the bound number value is the bound number; FIG. 5 is a schematic diagram of a canceling binding process in accordance with the embodiment of the present document, and as shown in FIG. 5, if the user cancels binding with the number, the number binding identification is set as not bound, the bound number value is set to empty.

### Second operation, calling operation

The calling operation comprises two scenarios, one is that the user initiates a call through the software client, and the other one is that the user receives the call through the software client.

First scenario, a scenario in which the user initiates a call through the software client

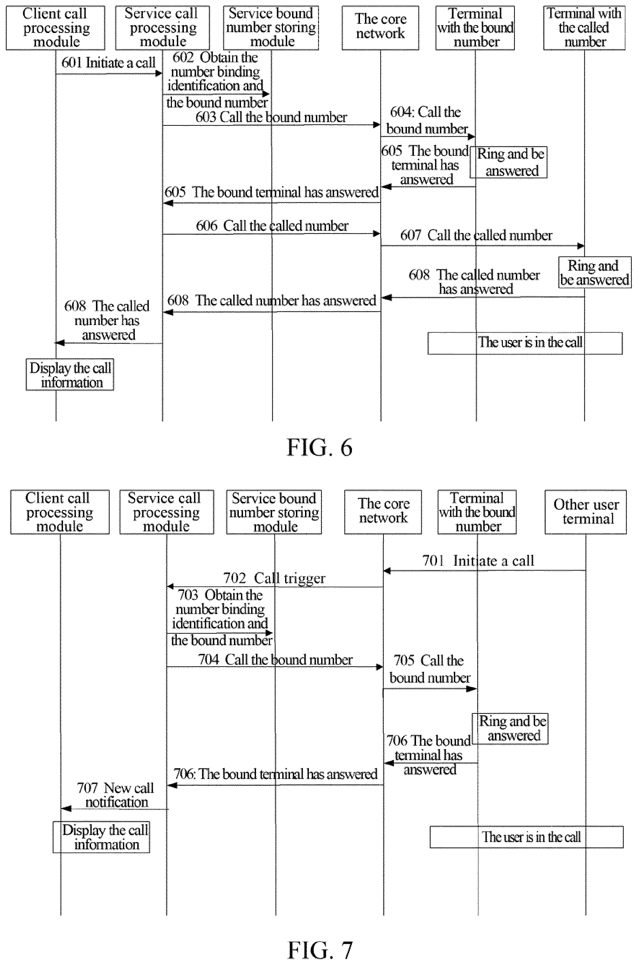

FIG. 6 is a schematic diagram of the process of initiating a call through the software client in accordance with an embodiment of the present document, as shown in FIG. 6, comprising the following steps:
in step 601, the user initiates a call to the service call processing module through the client call processing module. The called number can be input directly, or the called user number can be selected from the contact list or the call history. The software client call processing module sends the called number to the service call processing module.

In step 602, the service call processing module inquires the number binding identification in the service bound number storing module, and if the number binding identification is identified as bound, it inquires the bound number as the number of the terminal with which the user answers; if the number binding identification is identified as not bounded, then it inquiries the user's soft terminal number as the number of the terminal with which the user answers.

In step 603, the service call processing module initiates a call to the terminal with the bound number to the core network.

In step 604, the core network calls the terminal with the bound number.

In step 605, the terminal with the bound number rings and is answered.

In step 606, the service call processing module initiates a call to the terminal with the called number to the core network.

In step 607, the core network calls the terminal with the called number.

In step 608, the terminal with the called number rings and is answered, and the user can talk with the called user. The user software client call processing module displays the calling and called status information. If what to be bound is a cell phone number, the user can freely move during the call.

### Second scenario, a scenario in which the user acts as the called and answers the call

FIG. 7 is a schematic diagram of the process of a user receiving a call via the client software in accordance with an embodiment of the present document, as shown in FIG. 7, comprising the following steps:
in step 701, when other users call the user software terminal number, it is to initiate a call to the core network.

In step 702, the core network triggers the call to the service call processing module.

In step 703, the service call processing module inquiries the number binding identification in the service bound number storing module, and if the number binding identification is identified as bound, it inquiries the bound number as the number of the terminal with which the user answers; if the number binding identification is identified as not bound, it inquiries the user's soft terminal number as the number of the terminal with which the user answers.

In step 704, the service call processing module initiates a call to the terminal with the bound number to the core network.

In step 705, the core network calls the terminal with the bound number.

In step 706, after the bound terminal rings and is answered, the user can talk with the other user who initiates the call.

In step 707, the service call processing module sends a notification message to the software client call processing module. The user software client call processing module displays the calling and called status information. If what to be bound is a cell phone number, the use can freely move during the call. When the user is the called, if a mobile phone is bound, even if the user is not attached to the logged-in software client, the user can still answer the call, and no calls will be missed.

In summary, by means of the technical solution of the embodiment of the present document, by binding the software client to the operator's fixed phone or mobile phone number, the problems of low call quality and the possibility of missing incoming calls in the related art are solved, and using the VOIP service can obtain reliable call quality in the CS domain, thus having greater flexibility and not missing any incoming calls.

The algorithm and display provided herein are not specifically related to any particular computers, virtual systems or other equipments. Various general-purpose systems may also be used in conjunction with the teachings herein. According to the above description, the structure for constructing this kind of systems is apparent. Furthermore, the present document is not aiming at any particular programming languages. It should be understood that a variety of programming languages can be used to achieve the contents described in the embodiments of the present document, and the above description made for particular languages is the preferred embodiments for disclosing the embodiments of the present document.

In the specification provided herein, a lot of details are illustrated. However, it should be understood that the embodiments of the present document can be practiced without these details. Well-known methods, structures and techniques have not been shown in detail in some examples, so as not to obscure the understanding of the specification.

Similarly, it should be understood that in order to simplify the present document and help understand one or more aspects of the present document, in the above description of the exemplary embodiments of the present document, various features of the present document are sometimes grouped together into a single embodiment, figure, or description thereof. However, the disclosed method should not be interpreted as reflecting the following intention: that is, the claimed invention is requested to have more features than the features definitely set forth in each claim. More specifically, as reflected in the following claims, inventive aspects lie in less than all features of a single embodiment disclosed in the above. Thus, the claims following the embodiments should be definitely incorporated into this embodiment, wherein each claim itself works as a separate embodiment of the present document.

Those skilled in the art can understand that modules in the equipment of the embodiment can be adaptively changed and provided in one or more equipments different from the embodiment. Modules, units or components in the embodiment can be combined into one module, unit or component, and in addition, they can be divided into a plurality of sub-modules, sub-units or sub-components. Except that at least some of such features and/or processes or units are mutually exclusive, any combination thereof can be used to combine all the features disclosed in the present specification (including the appended claims, abstract and accompanying drawings), as well as all processes or units of the disclosed method or equipment. Unless otherwise definitely stated, each feature disclosed in the present specification (including the appended claims, abstract and accompanying drawings) may be replaced with alternative features providing the same, equivalent or similar purposes.

Moreover, those skilled in the art will understand that although some embodiments described herein comprise certain features included in other embodiments rather than other features, combinations of the features of different embodiments are meant to be in the scope of the present invention and form different embodiments. For example, in the following claims, any of the claimed embodiments can be used as any one of the combinations.

Various component embodiments of the present document may be implemented in hardware, or as software modules running in one or more processors, or as a combination thereof. Those skilled in the art should understand that a microprocessor or a digital signal processor (DSP) may be used in practice to achieve some or all of the functions of some or all components of the device for calling by binding a client to a terminal in accordance with the embodiment of the present document. The embodiment of the present document may also implement the equipment or device programs (such as computer programs and computer program products) for performing part or all of the method described herein. Such programs implementing the embodiment of the present document may be stored in a computer readable media, or may have the form of one or more signals. Such signals can be downloaded from the Internet website, or provided in a carrier signal or in any other form.

It should be noted that the abovementioned embodiments are intended to illustrate rather than limit the present invention, and those skilled in the art may devise alternative embodiments without departing from the scope of the appended claims. In the claims, any reference signs located between parentheses should not be configured to restrict the claims. The term "include" does not exclude elements or steps that are not listed in the claims. The term "a" or "one" located before the component does not exclude a plurality of such elements. The present invention may be achieved by means of hardware comprising several different components as well as a computer being suitable for programming. In the unit claims enumerating several devices, several ones in these devices may be embodied with the same hardware item. The use of the terms "first", "second", and "third" and so on does not denote any order. These terms should be interpreted as names.

### Industrial Applicability

The embodiment of the present document solves the problem in the related art that the call quality is low and incoming calls might be missed, and it can obtain reliable call quality in the CS domain, thus having greater flexibility and not missing incoming calls.

## Claims

1. A method for calling by binding a software client to a terminal, the method being performed by the software client and comprising:
obtaining a soft terminal number assigned by a service after a user logs in the software client (101);
obtaining a phone number, input by the user, of the terminal bound with the software client, performing validity checking on the phone number, and associating the phone number with the soft terminal number in the case that the validity checking is passed (102); and
when the user performs a call service through the software client, connecting the call service to the phone number (103);
wherein associating the phone number with the soft terminal number comprises:
storing the phone number in user information corresponding to the soft terminal number in the software client, and setting a number binding identification as bound;
wherein connecting the call service to the phone number when the user performs the call service through the software client comprises:
when the user initiates (601) a call to a terminal with a called number through the software client, checking the number binding identification, and in the case that the number binding identification is identified as bound, obtaining (602) the phone number which is bound from the user information, and initiating (603) a call to the phone number through a core network, and after a bound terminal rings and the user answers the call, initiating (606) a call to the terminal with the called number through the core network; and
when other users initiate a call to the soft terminal number, regardless of whether the user logs in the software client or not, after receiving (702) a call service trigger from the core network, checking the number binding identification, and in the case that the number binding identification is identified as bound, obtaining (703) the phone number which is bound from the user information, and initiating (704) to a call to the phone number to the core network.

2. The method of claim 1, further comprising:
canceling binding with the phone number according to operations of the user; and
when the user performs the call service through the software client, connecting the call service to the soft terminal number.

3. The method of claim 1, further comprising:
maintaining a list of phone numbers bound in history; and
when the user inputs a phone number bound with the software client, displaying the list of phone numbers to the user.

4. The method of claim 1, wherein performing the validity checking on the phone number comprises:
obtaining a preset list of numbers prohibited from being bound, comparing the phone number with numbers in the list of numbers prohibited from being bound, and if the phone number is not in the list of numbers prohibited from being bound, the validity checking being passed, and if the phone number is in the list of numbers prohibited from being bound, the validity checking not being passed; and
in the case that the validity checking is passed, if that there is a need to add an area code or add 0 to the phone number is determined, regulating the phone number.

5. The method of claim 2, wherein canceling binding with the phone number according to operations of the user comprises:
setting the phone number to empty, and setting the number binding identification as not bound,

6. The method of claim 5, wherein connecting the call service to the soft terminal number when the user performs the call service through the software client comprises:
when the user initiates the call to a terminal with called number through the software client, and the number binding identification is identified as not bound, taking the soft terminal number as a calling number, and initiating the call to the terminal with the called number through the core network;
when other users initiate the call to the soft terminal number, and the number binding identification is identified as not bound, initiating the call to the soft terminal number through the core network.

7. The method of any one of claims 1 to 6, wherein the terminal bound with the software client is a fixed terminal or a mobile terminal, and the phone number bound with the software client is a fixed phone number or a mobile phone number; and the software client is provided in a PC or a mobile terminal.

8. A software client for calling by binding the software client to a terminal, that, when executed on a device, causes:
an obtaining module (20) of the device to: obtain a soft terminal number assigned by a service after a user logs in the software client;
a binding module (22) of the device to: obtain a phone number, input by the user, of the terminal bound with the software client, perform validity checking on the phone number, and associate the phone number with the soft terminal number in the case that the validity checking is passed; and
a connecting module (24) of the device to: when the user performs a call service through the software client, connect the call service to the phone number;
wherein the binding module (22) is configured to associate the phone number with the soft terminal number in the following manner:
store the phone number in user information corresponding to the soft terminal number in the software client, and set a number binding identification as bound;
the connecting module (24) is configured to connect the call service to the phone number when the user performs the call service through the software client in the following manner:
when the user initiates a call to a terminal with called number through the software client, check the number binding identification, and obtain the phone number which is bound from the user information in the case that the number binding identification is identified as bound, and initiate a call to the phone number through a core network, and
after a bound terminal rings and the user answers the call, initiate a call to the terminal with the called number through the core network; and
when other users initiate a call to the soft terminal number, regardless of whether the user logs in the software client or not, check the number binding identification after receiving a call service trigger from the core network, and in the case that the number binding identification is identified as bound, obtain the phone number which is bound from the user information, and initiate a call to the phone number to the core network.

9. The software client of claim 8, wherein, the binding module (22) is further configured to: cancel binding with the phone number according to operations of the user; and
the connecting module (24) is further configured to: when the user performs the call service through the software client, connect the call service to the soft terminal number.

10. The software client of claim 8, wherein the binding module (22) is further configured to:
maintain a list of phone numbers bound in history; and
when the user inputs a phone number bound with the software client, display the list of phone numbers to the user.

11. The software client of claim 8, wherein the binding module (22) is configured to perform the validity checking on the phone number in the following manner:
obtain a preset list of numbers prohibited from being bound, compare the phone number with numbers in the list of numbers prohibited from being bound, and the validity checking being passed if the phone number is not in the list of numbers prohibited from being bound, and the validity checking not being passed if the phone number is in the list of numbers prohibited from being bound; and
in the case that the validity checking is passed, if that there is a need to add an area code or add 0 to the phone number is determined, then regulate the phone number.

12. The software client of claim 9, wherein the binding module (22) is configured to cancel binding with the phone number according to operations of the user in the following manner:
set the phone number to empty, and set the number binding identification as not bound;
the connecting module (24) is configured to connect the call service to the soft terminal number when the user performs the call service through the software client in the following manner:
when the user initiates the call to a terminal with called number through the software client, and the number binding identification is identified as not bound, initiate the call to the terminal with the called number through the core network; and
when other users initiates the call to the soft terminal number, and the number binding identification is identified as not bound, initiate the call to the soft terminal number through the core network.

13. The software client of any one of claims 8 to 12, wherein the terminal bound with the software client is a fixed terminal or a mobile terminal, and the phone number bound with the software client is a fixed phone number or a mobile phone number; the software client is provided in a personal computer or a mobile terminal.

## Patentansprüche

1. Ein Verfahren zum Aufrufen eines Software-Clients durch Binden an ein Endgerät, wobei das Verfahren durch den Software-Client ausgeführt wird und Folgendes umfasst:
Erhalten einer Soft-Endgerätnummer, die von einem Dienst nach der Anmeldung eines Benutzers beim Software-Client zugewiesen wird (101);
Erhalten einer vom Benutzer eingegebenen Telefonnummer des an den Software-Client gebundenen Endgeräts, Durchführen einer Gültigkeitsprüfung der Telefonnummer und Zuordnen der Telefonnummer zu der Soft-Endgerätnummer für den Fall, dass die Gültigkeitsprüfung bestanden wird (102); und
wenn der Benutzer einen Anrufdienst über den Software-Client ausführt und den Anrufdienst mit der Telefonnummer verbindet (103);
wobei das Zuordnen der Telefonnummer zu der Soft-Endgerätnummer umfasst:
Speicherung der Telefonnummer in den Benutzerinformationen, die der Soft-Endgerätnummer im Software-Client entsprechen, und Festlegung einer Nummer gebundenen Identifikation als gebunden;
wobei das Verbinden des Anrufdienstes mit der Telefonnummer, wenn der Benutzer den Anrufdienst über den Software-Client ausführt, umfasst:
wenn der Benutzer einen Anruf an ein Endgerät mit einer angerufenen Nummer über den Software-Client einleitet (601), Überprüfung der Nummernbindungsidentifikation, und in dem Fall, dass die Nummernbindungsidentifikation als gebunden identifiziert wird, Erhalten (602) der Telefonnummer, die aus den Benutzerinformationen gebunden ist, und Einleiten (603) eines Anrufs an die Telefonnummer über ein Kernnetzwerk, und nachdem ein gebundenes Endgerät klingelt und der Benutzer den Anruf beantwortet, Einleiten (606) eines Anrufs an das Endgerät mit der angerufenen Nummer über das Kernnetzwerk; und
wenn andere Benutzer einen Anruf an die Soft-Endgerätnummer einleiten, unabhängig davon, ob sich der Benutzer im Software-Client anmeldet oder nicht, nach dem Empfang (702) eines Anrufdienst-Auslösers vom Kernnetzwerk, Überprüfung der Nummernbindungsidentifikation und, falls die Nummernbindungsidentifikation als gebunden identifiziert wird, Erhalten (703) der Telefonnummer, die von der Benutzerinformation gebunden ist, und Einleiten (704) eines Anrufs an die Telefonnummer zum Kernnetzwerk.

2. Das Verfahren nach Anspruch 1, ferner umfassend:
Aufhebung der Bindung mit der Telefonnummer gemäß den Handlungen des Benutzers; und
wenn der Benutzer den Anrufdienst über den Software-Client ausführt die Verbindung des Anrufdienstes mit der Soft-Endgerätnummer.

3. Das Verfahren nach Anspruch 1, ferner umfassend:
Verwaltung einer Liste von Telefonnummern, die in der Vergangenheit gebunden wurden; und
wenn der Benutzer eine mit dem Software-Client gebundene Telefonnummer eingibt, Anzeigen der Telefonnummernliste an den Benutzer.

4. Das Verfahren nach Anspruch 1, wobei die Durchführung der Gültigkeitsprüfung an der Telefonnummer umfasst:
Erhalten einer vorgegebenen Liste von Nummern, die nicht gebunden werden dürfen, Vergleichen der Telefonnummer mit Nummern in der Nummernliste, die nicht gebunden werden dürfen, und wenn die Telefonnummer nicht in der Liste der Nummern ist, die nicht gebunden werden dürfen, Bestehen der Gültigkeitsprüfung, und wenn die Telefonnummer in der Liste der Nummern ist, die nicht gebunden werden dürfen, Nichtbestehen der Gültigkeitsprüfung; und
für den Fall, dass die Gültigkeitsprüfung bestanden wird, falls die Notwendigkeit festgestellt wird, eine Vorwahl hinzuzufügen oder die Telefonnummer um eine 0 zu erweitern, wird die Telefonnummer festgelegt.

5. Das Verfahren nach Anspruch 2, wobei das Aufheben der Bindung mit der Telefonnummer gemäß den Handlungen des Benutzers umfasst:
Setzen der Telefonnummer auf Leer und Setzen der Nummernbindungsidentifikation als nicht gebunden.

6. Das Verfahren nach Anspruch 5, wobei das Verbinden des Anrufdienstes mit der Soft-Endgerätnummer, wenn der Benutzer den Anrufdienst über den Software-Client ausführt, umfasst:
wenn der Benutzer den Anruf über den Software-Client an ein Endgerät mit der angerufenen Nummer einleitet und die Nummernbindungsidentifikation als nicht gebunden identifiziert ist, wobei die Soft-Endgerätnummer als Rufnummer genommen und der Anruf an das Endgerät mit der angerufenen Nummer über das Kernnetzwerk eingeleitet wird;
wenn andere Benutzer den Anruf an die Soft-Endgerätnummer initiieren und die Nummernbindungsidentifikation als nicht gebunden identifiziert wird, wobei der Anruf an die Soft-Endgerätnummer über das Kernnetzwerk initiiert wird.

7. Verfahren nach einem der Ansprüche 1 bis 6, wobei das an den Software-Client gebundene Endgerät ein festes Endgerät oder ein mobiles Endgerät ist und die an den Software-Client gebundene Telefonnummer eine Festnetz- oder eine Mobiltelefonnummer ist; und der Software-Client in einem PC oder einem mobilen Endgerät bereitgestellt wird.

8. Ein Software-Client zum Anrufen durch das Verbinden des Software-Clients mit einem Endgerät, der, wenn er auf einem Gerät ausgeführt wird, bewirkt, dass
ein Erhaltungsmodul (20) des Geräts: eine von einem Dienst zugewiesene Soft-Endgerätnummer erhält, nachdem sich ein Benutzer in den Software-Client einloggt;
ein Bindungsmodul (22) des Geräts: eine vom Benutzer eingegebene Telefonnummer des mit dem Software-Client gebundenen Endgeräts erhält, eine Gültigkeitsprüfung der Telefonnummer durchführt und die Telefonnummer mit der Soft-Endgerätnummer verbindet, falls die Gültigkeitsprüfung bestanden wird; und
ein Verbindungsmodul (24) des Geräts: wenn der Benutzer einen Anrufdienst über den Software-Client ausführt, den Anrufdienstes mit der Telefonnummer zu verbinden;
wobei das Bindungsmodul (22) konfiguriert ist, um die Telefonnummer mit der Soft-Endgerätnummer in der folgenden Weise zu verbinden:
Speichern der Telefonnummer in den Benutzerinformationen, die der Soft-Endgerätnummer im Software-Client entsprechen, und Setzen einer Nummernbindungsidentifikation als gebunden;
das Verbindungsmodul (24) so konfiguriert ist, dass es den Anrufdienst mit der Telefonnummer verbindet, wenn der Benutzer den Anrufdienst über den Software-Client wie folgt durchführt:
wenn der Benutzer über den Software-Client einen Anruf an ein Endgerät mit der angerufenen Nummer einleitet, die Nummernbindungsidentifikation zu überprüfen und die Telefonnummer, die gebunden ist, aus den Benutzerinformationen zu erhalten, falls die Nummernbindungsidentifikation als gebunden definiert ist, und einen Anruf an die Telefonnummer über ein Kernnetzwerk einzuleiten; und nachdem ein gebundenes Endgerät klingelt und der Benutzer den Anruf beantwortet, einen Anruf an das Endgerät mit der angerufenen Nummer über das Netzwerk einzuleiten; und
wenn andere Benutzer einen Anruf an die Soft-Endgerätnummer einleiten, unabhängig davon, ob sich der Benutzer im Software-Client anmeldet oder nicht, Überprüfen der Nummernbindungsidentifikation nach dem Empfang eines Anrufdienst-Auslösers aus dem Kernnetzwerk, und für den Fall, dass die Nummernbindungsidentifikation als gebunden identifiziert wird, Erhalten der Telefonnummer, die aus den Benutzerinformationen gebunden ist, und Einleiten eines Anrufs an die Telefonnummer des Kernnetzwerks.

9. Der Software-Client nach Anspruch 8, wobei,
das Bindungsmodul (22) weiter konfiguriert ist, um: die Bindung mit der Telefonnummer gemäß den Handlungen des Benutzers aufzuheben; und
das Verbindungsmodul (24) ferner konfiguriert ist: wenn der Benutzer den Anrufdienst über den Software-Client ausführt, den Anrufdienstes mit der Soft-Endgerätnummer zu verbinden.

10. Der Software-Client nach Anspruch 8, wobei das Bindungsmodul (22) weiter konfiguriert ist:
eine Liste von Telefonnummern zu pflegen, die in der Vergangenheit gebunden wurden; und
wenn der Benutzer eine mit dem Software-Client gebundene Telefonnummer eingibt, die Liste der Telefonnummern für den Benutzer anzuzeigen.

11. Der Software-Client nach Anspruch 8, wobei das Bindungsmodul (22) konfiguriert ist, um die Gültigkeitsprüfung der Telefonnummer auf folgende Weise durchzuführen:
Erhalten einer voreingestellten Liste von Nummern, die nicht gebunden werden dürfen, Vergleichen der Telefonnummer mit Nummern in der Liste von Nummern, die nicht gebunden werden dürfen, und die Gültigkeitsprüfung wird nicht bestanden, wenn die Telefonnummer in der Liste von Nummern, die nicht gebunden werden dürfen, enthalten ist; und
im Falle, dass die Gültigkeitsprüfung bestanden wird, die Notwendigkeit besteht, eine Vorwahl hinzuzufügen oder die Telefonnummer um eine 0 zu erweitern, dann: die Telefonnummer zu regulieren.

12. Der Software-Client nach Anspruch 9, wobei das Bindungsmodul (22) so konfiguriert ist, dass es die Bindung mit der Telefonnummer entsprechend den Handlungen des Benutzers wie folgt aufhebt:
Setzen der Telefonnummer auf Leere, und Setzen der Nummernbindungsidentifikation als nicht gebunden;
das Verbindungsmodul (24) so konfiguriert ist, dass es den Anrufdienst mit der Soft-Endgerätnummer verbindet, wenn der Benutzer den Anrufdienst über den Software-Client wie folgt durchführt:
wenn der Benutzer den Anruf an ein Endgerät mit der angerufenen Nummer über den Software-Client aufführt und die Nummernbindungsidentifikation als nicht gebunden identifiziert wurde, Einleiten des Anrufs des Endgeräts mit der angerufenen Nummer über das Kernnetzwerk; und
wenn andere Benutzer den Anruf an die Soft-Endgerätnummer einleiten und die Nummernbindungsidentifikation als nicht gebunden identifiziert wird, Einleiten des Anrufs an die Soft-Endgerätnummer über das Kernnetzwerk.

13. Der Software-Client nach einem der Ansprüche 8 bis 12, wobei das an den Software-Client gebundene Endgerät ein festes oder mobiles Endgerät ist und die an den Software-Client gebundene Telefonnummer eine Festnetz- oder eine Mobiltelefonnummer ist; der Software-Client wird in einem PC oder einem mobilen Endgerät bereitgestellt.

## Revendications

1. Precédé pour appeler en liant un client logiciel à un terminal, la méthode étant exécutée par le client logiciel et comprenant :
obtenir un numéro de terminal logiciel attribué par un service après qu'un utilisateur se soit connecté au logiciel client (101) ;
obtenir un numéro de téléphone, saisi par l'utilisateur, du terminal lié au client logiciel, effectuer un contrôle de validité sur le numéro de téléphone, et associer le numéro de téléphone au numéro du terminal logiciel dans le cas où le contrôle de validité est réussi (102)
dans lequel l'utilisateur effectue un service d'appel par l'intermédiaire du client logiciel, en connectant le service d'appel au numéro de téléphone (103) ;
dans lequel l'association du numéro de téléphone avec le numéro du terminal logiciel comprend :
le stockage du numéro de téléphone dans les informations d'utilisateur correspondant au numéro du terminal logiciel dans le client logiciel, et la définition d'une identification de liaison de numéro comme étant liée ;
dans lequel la connexion du service d'appel au numéro de téléphone lorsque l'utilisateur effectue le service d'appel par l'intermédiaire du client logiciel comprend :
lorsque l'utilisateur effectue (601) un appel vers un terminal avec un numéro appelé via le client logiciel, en vérifiant l'identification du numéro lié, et dans le cas où l'identification du numéro lié est identifiée comme liée, en obtenant (602) le numéro de téléphone qui est lié à partir des informations de l'utilisateur, et en effectuant (603) un appel vers le numéro de téléphone via un réseau central, et après qu'un terminal lié a sonné et que l'utilisateur a répondu à l'appel, en effectuant (606) un appel vers le terminal avec le numéro appelé via le réseau central ; et
lorsque d'autres utilisateurs effectuent un appel vers le numéro du terminal logiciel, que l'utilisateur se connecte ou non au client logiciel, après avoir reçu (702) un déclencheur de service d'appel du réseau central, après avoir vérifié l'identification de liaison du numéro, et dans le cas où l'identification de liaison du numéro est identifiée comme liée, après avoir obtenu (703) le numéro de téléphone qui est lié à partir des informations de l'utilisateur et après avoir effectué (704) un appel vers le numéro de téléphone du réseau central.

2. Le procédé selon la revendication 1, comprenant en outre :
l'annulation de la liaison avec le numéro de téléphone selon les opérations de l'utilisateur ; et
lorsque l'utilisateur effectue le service d'appel par le client logiciel, en connectant le service d'appel au numéro du terminal logiciel.

3. Le procédé selon la revendication 1, comprenant en outre :
la maintenance d'une liste de numéros de téléphone liés dans l'histoire
lorsque l'utilisateur saisit un numéro de téléphone lié au client logiciel, en affichant la liste des numéros de téléphone à l'utilisateur.

4. Le procédé selon la revendication 1, dans lequel le contrôle de validité du numéro de téléphone est effectué, comprend
obtenir une liste prédéfinie de numéros interdits à être liés, en comparant le numéro de téléphone avec les numéros de la liste des numéros interdits à être liés, et si le numéro de téléphone ne se trouve pas dans la liste des numéros interdits à être liés, le contrôle de validité est réussi, et si le numéro de téléphone se trouve dans la liste des numéros interdits à être liés, le contrôle de validité n'est pas réussi ; et
dans le cas du contrôle de validité est réussi, s'il est nécessaire d'ajouter un indicatif régional ou d'ajouter un 0 au numéro de téléphone est déterminé, en réglementant le numéro de téléphone.

5. Le procédé selon la revendication 2, dans lequel l'annulation de la liaison avec le numéro de téléphone selon les opérations de l'utilisateur comprend :
en définissant le numéro de téléphone comme vide, et en définissant le numéro d'identification lié comme non lié.

6. Le procédé selon la revendication 5, dans lequel la connexion du service d'appel au numéro du terminal logiciel lorsque l'utilisateur effectue le service d'appel par le client logiciel comprend :
lorsque l'utilisateur effectue l'appel vers un terminal avec le numéro appelé par le client logiciel et que l'identification de liaison de numéro est identifié comme non liée, en prenant le numéro du terminal logiciel comme numéro d'appel et en effectuant l'appel vers le terminal avec le numéro appelé par le réseau central ;
lorsque d'autres utilisateurs initient l'appel vers le numéro du terminal logiciel, et que l'identification de liaison de numéro est identifié comme non lié, en initiant l'appel vers le numéro du terminal logiciel via le réseau central.

7. Le procédé selon l'une quelconque des revendications 1 à 6, dans lequel le terminal lié au client logiciel est un terminal fixe ou un terminal mobile, et le numéro de téléphone lié au client logiciel est un numéro de téléphone fixe ou un numéro de téléphone mobile ; et le client logiciel est fourni dans un ordinateur ou un terminal mobile.

8. Un client logiciel pour appeler en liant le logiciel à un terminal, lequel, lorsqu'il est exécuté sur un appareil, provoque un module d'obtention (20) de l'appareil de : obtenir un numéro de terminal logiciel attribué par un service après qu'un utilisateur se soit connecté au client logiciel ;
un module de liaison (22) de l'appareil de: obtenir un numéro de téléphone, saisi par l'utilisateur, du terminal lié au client logiciel, effectuer un contrôle de validité du numéro de téléphone, et associer le numéro de téléphone au numéro du terminal logiciel dans le cas que le contrôle de validité est réussi ; et
un module de connexion (24) de l'appareil de : lorsque l'utilisateur effectue un service d'appel par le client logiciel, connecter le service d'appel au numéro de téléphone ;
dans lequel le module de liaison (22) est configuré pour associer le numéro de téléphone au numéro du terminal logiciel de la manière suivante :
stocker le numéro de téléphone dans les informations d'utilisateur correspondant au numéro du terminal logiciel dans le client logiciel, et définir une identification de liaison de numéro comme liée ;
le module de connexion (24) est configuré pour connecter le service d'appel au numéro de téléphone lorsque l'utilisateur effectue le service d'appel via le client logiciel de la manière suivante :
lorsque l'utilisateur effectue un appel vers un terminal avec le numéro appelé par le client logiciel, vérifier l'identification de liaison du numéro et obtenir le numéro de téléphone lié à partir des informations d'utilisateur dans le cas que l'identification de liaison du numéro est identifiée comme liée, et effectuer un appel vers le numéro de téléphone par un réseau central ; et après qu'un terminal lié ait sonné et que l'utilisateur ait répondu à l'appel, effectuer un appel vers le terminal avec le numéro appelé par le réseau ; et
lorsque d'autres utilisateurs effectuent un appel vers le numéro du terminal logiciel, que l'utilisateur se connecte ou non au client logiciel, vérifier l'identification de liaison du numéro après avoir reçu un déclencheur de service d'appel du réseau central, et dans le cas que l'identification de liaison du numéro est identifiée comme liée, obtenir le numéro de téléphone qui est lié à partir des informations d'utilisateur, et effectuer un appel vers le numéro de téléphone au réseau central.

9. Le client logiciel selon la revendication 8, dans lequel,
le module de liaison (22) est en outre configuré de : annuler la liaison avec le numéro de téléphone selon les opérations de l'utilisateur ; et
le module de connexion (24) est en outre configuré de : lorsque l'utilisateur effectue le service d'appel par le client logiciel, connecter le service d'appel au numéro du terminal logiciel.

10. Le client logiciel selon la revendication 8, dans lequel le module de liaison (22) est en outre configuré de :
maintenir une liste des numéros de téléphone liés dans l'histoire ; et
lorsque l'utilisateur saisit un numéro de téléphone lié au client logiciel, afficher la liste des numéros de téléphone à l'utilisateur.

11. Le client logiciel selon la revendication 8, dans lequel le module de liaison (22) est configuré pour effectuer le contrôle de validité du numéro de téléphone de la manière suivante :
obtenir une liste prédéfinie de numéros interdits à être liés, comparer le numéro de téléphone avec les numéros de la liste des numéros interdits à être liés, et le contrôle de validité n'étant pas réussi si le numéro de téléphone se trouve dans la liste des numéros interdits à être liés ; et
dans le cas que le contrôle de validité est réussi, s'il est nécessaire d'ajouter un code régional ou d'ajouter un 0 au numéro de téléphone est déterminé, puis : régler le numéro de téléphone.

12. Le client logiciel selon la revendication 9, dans lequel le module de liaison (22) est configuré pour annuler la liaison avec le numéro de téléphone selon les opérations de l'utilisateur de la manière suivante :
définir le numéro de téléphone comme vide, et définir l'identification de liaison du numéro comme non liées ;
le module de connexion (24) est configuré pour connecter le service d'appel au numéro du terminal logiciel lorsque l'utilisateur effectue le service d'appel par le client logiciel de la manière suivante :
lorsque l'utilisateur effectue l'appel vers un terminal avec le numéro appelé par le client logiciel, et que l'identification de liaison du numéro est identifiée comme non liée, effectuer l'appel du terminal avec le numéro appelé par le réseau central ; et
lorsque d'autres utilisateurs effectuent l'appel vers le numéro du terminal logiciel, et que l'identification de liaison du numéro est identifiée comme non liée, effectuer l'appel vers le numéro du terminal logiciel via le réseau central.

13. Le client logiciel selon l'une quelconque des revendications 8 à 12, dans lequel le terminal lié au client logiciel est un terminal fixe ou un terminal mobile, et le numéro de téléphone lié au client logiciel est un numéro de téléphone fixe ou un numéro de téléphone mobile ; le client logiciel est fourni dans un ordinateur ou un terminal mobile.
